# EUROPEAN PATENT SPECIFICATION

(11) **EP 2 098 024 B1**
(45) Date of publication and mention of the grant of the patent: **27.04.2016**
(21) Application number: 07862380.8
(22) Date of filing: 29.11.2007
(51) Int. Cl.: H04W 36/02

(54) **TECHNIQUES FOR LOSSLESS PACKET TRANSITION ACROSS BASIC SERVICE SETS IN WIRELESS NETWORKS**
TECHNIKEN FÜR VERLUSTLOSEN PAKETÜBERGANG ÜBER BASISSTATIONEN IN DRAHTLOSEN NETZEN
TECHNIQUES POUR UNE TRANSITION DE PAQUETS SANS PERTE À TRAVERS DES ENSEMBLES DE SERVICE DE BASE DANS DES RÉSEAUX SANS FIL

(30) Priority: 28.12.2006 US 648338
(43) Date of publication of application: 09.09.2009
(73) Proprietor: Intel Corporation, Santa Clara, CA 95052 (US)
(72) Inventor: QI, Emily, H., Portland, OR 97229 (US); FUDIM, Max, Newton, MA (US); MACIOCCO, Christian, Portland, OR 97229 (US); HATTIG, Myron, Portland, OR 97229 (US); GINZBURG, Boris, 32812 Haifa (IL)
(74) Representative: Clarke, Jeffrey David
(86) International application number: PCT/US2007/024652
(87) International publication number: WO 2008/088470

(56) References cited:
- WO-A2-98/47302
- US-A1- 2003 086 395
- US-A1- 2005 047 381
- US-A1- 2006 083 201
- US-A1- 2007 025 371
- US-A1- 2007 189 217
- DUTTA A ET AL: "Dynamic Buffering Control Scheme for Mobile Handoff", PERSONAL, INDOOR AND MOBILE RADIO COMMUNICATIONS, 2006 IEEE 17TH INTER NATIONAL SYMPOSIUM ON, IEEE, PI, 1 September 2006 (2006-09-01), pages 1-11, XP031023518, DOI: 10.1109/PIMRC.2006.254222 ISBN: 978-1-4244-0329-5
- YAMAGATA F ET AL: "Seamless Handover for Hotspot Network Using Dual Receiver Switching Method", TENCON 2006. 2006 IEEE REGION 10 CONFERENCE, IEEE, PI, 14 November 2006 (2006-11-14), pages 1-4, XP031333339, ISBN: 978-1-4244-0548-0
- CHUN-TING CHOU ET AL: "Smooth Handoff with Enhanced Packet Buffering-and-Forwarding in Wireless/Mobile Networks", QUALITY OF SERVICE IN HETEROGENEOUS WIRED/WIRELESS NETWORKS, 2005. SEC OND INTERNATIONAL CONFERENCE ON ORLANDO, FL, USA 22-24 AUG. 2005, PISCATAWAY, NJ, USA,IEEE, 22 August 2005 (2005-08-22), pages 39-39, XP010859429, DOI: 10.1109/QSHINE.2005.56 ISBN: 978-0-7695-2423-8

## Description

### BACKGROUND

Packet loss is a well-known issue when a mobile client transitions from one Access Point (AP) to another AP. With the Institute for Electronic and Electrical Engineers (IEEE) 802.1 Ir (Fast BSS Transition) standard under development, the transition time between two APs has been reduced significantly, but there is still a window of time, while the 802.1 Ir signaling finishes up its last phase, where packets will still be directed to the old AP and thus be lost. Packet losses are mainly caused by queued packets in the old AP awaiting transmission once the client has moved to the new AP, and misdirected packets (to the old AP) during the transition processes. The introduction of the Aggregated MSDU in IEEE 802.1 In device significantly worsens the situation that is described above.

Thus, a strong need exists for techniques for lossless packet transition across basic service sets in wireless networks.

DUTTA A ET AL: "Dynamic Buffering Control Scheme for Mobile Handoff", PERSONAL, INDOOR AND MOBILE RADIO COMMUNICATIONS, 2006 IEEE 17TH INTER NATIONAL SYMPOSIUM ON, IEEE, PI, 1 September 2006, pages 1-11 relates to a dynamic buffering control scheme for mobile handoff. WO 98/47302 relates to avoiding packet loss at a handover in a packet-based telecommunications network.

### SUMMARY

Aspects and embodiments of the invention are set out in the appended claims.

### BRIEF DESCRPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 illustrates the packet loss during the BSS transition of an embodiment of the present invention; and
FIG. 2 is a procedure of packet loss avoidance transition of an embodiment of the present invention.

It will be appreciated that for simplicity and clarity of illustration, elements illustrated in the figures have not necessarily been drawn to scale. For example, the dimensions of some of the elements are exaggerated relative to other elements for clarity.
Further, where considered appropriate, reference numerals have been repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Embodiments of the invention may be used in a variety of applications. Some embodiments of the invention may be used in conjunction with various devices and systems, for example, a transmitter, a receiver, a transceiver, a transmitter-receiver, a wireless communication station, a wireless communication device, a wireless Access Point (AP), a modem, a wireless modem, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, a network, a wireless network, a Local Area Network (LAN), a Wireless LAN (WLAN), a Metropolitan Area Network (MAN), a Wireless MAN (WMAN), a Wide Area Network (WAN), a Wireless WAN (WWAN), devices and/or networks operating in accordance with existing IEEE 802.11, 802.11a, 802.11b, 802.11e, 802.11g, 802.11 h, 802.11i, 802.11n, 802.16, 802.16d, 802.16e standards and/or future versions and/or derivatives and/or Long Term Evolution (LTE) of the above standards, a Personal Area Network (PAN), a Wireless PAN (WPAN), units and/or devices which are part of the above WLAN and/or PAN and/or WPAN networks, one way and/or two-way radio communication systems, cellular radio-telephone communication systems, a cellular telephone, a wireless telephone, a Personal Communication Systems (PCS) device, a PDA device which incorporates a wireless communication device, a Multiple Input Multiple Output (MIMO) transceiver or device, a Single Input Multiple Output (SIMO) transceiver or device, a Multiple Input Single Output (MISO) transceiver or device, a Multi Receiver Chain (MRC) transceiver or device, a transceiver or device having "smart antenna" technology or multiple antenna technology, or the like. Some embodiments of the invention may be used n conjunction with one or more types of wireless communication signals and/or systems, for example, Radio Frequency (RF), Infra Red (IR), Frequency Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), Extended GPRS, Code-Division Multiple Access (CDMA), Wideband CDMA (WCDMA), CDMA 2000, Multi-Carrier Modulation (MDM), Discrete Multi-Tone (DMT), Bluetooth (RTM), ZigBee (TM), or the like. Embodiments of the invention may be used in various other apparatuses, devices, systems and/or networks.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations.

As stated above, packet loss is a key issue when a mobile client transitions from one AP to another AP. With the IEEE 802.11r (Fast BSS Transition) techniques, the transition time between APs has been significantly reduced, but there is still a window of time where packets may be lost Especially, those packets queued in the current AP during the transition phase or misdirected to the old AP during this same transition period will be lost. This will become worse with 802.11n A-MSDU capability, increasing the losses during the transition.

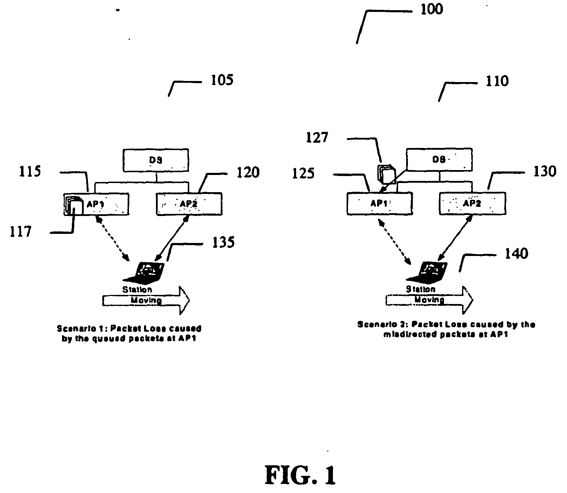

As seen in FIG. 1, Packet Loss may occur during the BSS transition. In scenario 1 at 105 DS connects AP1 and AP2 which may wirelessly communicate with wireless station (STA) 135 and in this scenario packet loss is caused by the queued packets 117 at AP1 115. In scenario 2 at 110, again DS connects AP1 125 and AP2 130 with STA 140 and packet loss may be caused by the misdirected packets 127 at AP1 140.

An embodiment of the present invention provides a network/AP assisted scheme to allow STA to receive the queued packets from the old AP after the STA re-associates to the new AP. The proposed scheme results in zero packet loss during BSS transition. This packet loss avoidance scheme enables seamless connectivity of VoIP, Video conferencing, and Video stream during BSS transition. An embodiment of the present invention may be easily deployed in Communication Platforms, handheld devices, or access points to improve wireless product performance and enable a richer wireless LAN experience for mobile users.

An embodiment of the present invention enables seamless and lossless transition among APs and may be particularly important for incoming type of devices like Ultra-Mobile PC (UMPC), handheld devices, etc. as it provides the following:
1. It defines a Post-Transition Session Aliveness Interval to extend AP and STA's association session aliveness and session key aliveness after STA reassociates to a new AP.
2. It avoids creating two association sessions which may cause confusion for packet forwarding. The old session is only considered as an extension session between the old AP and the STA. At the network switch or AP controller side, only the new association session is recorded.
3. It defines a negotiation scheme to allow AP and STA to sync-up Post-Transition Session aliveness, and aliveness interval.
4. It defines a sequence of transition operations which create lossless packet transition by using the existing Power Saving mode operation.

Some embodiments of the present invention provide a Post-Transition Extended Session and a Post-Transition Extended Session Aliveness Interval (PostTransitionSessionAlivenessInterval). After the station (STA) transitioned to the new AP, STA and old AP shall keep the old session alive, Pairwise Temporal Key (PTK) and Group Temporal Key (GTK) alive for the duration of the Post-Transition Extended Session Aliveness Interval. During the Post-transition Extended Session, the STA may come back to the old AP and recover all the leftover packets. The Post-Transition Session Aliveness Interval may be 2 bytes long, and may be negotiated between AP and STA during (re)association process. The value of 0 indicates that AP and STA don't support this feature.

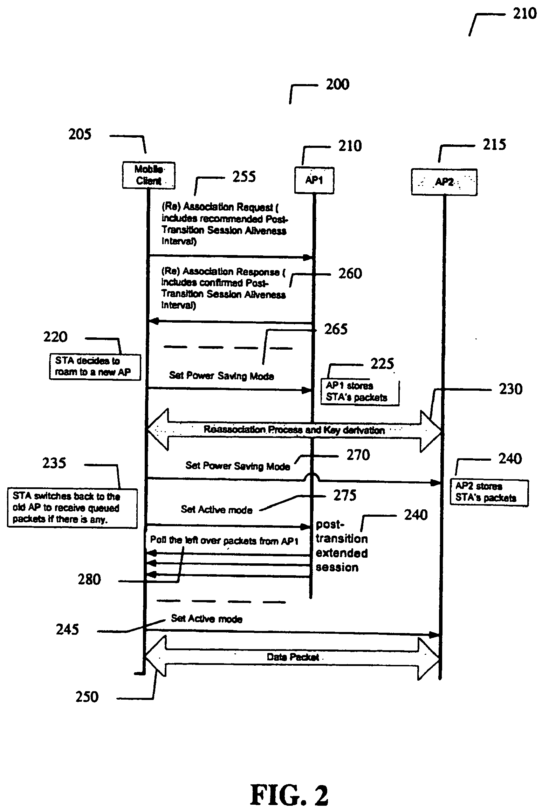

Some embodiments of the present invention provide for following procedures for the packet loss avoidance transition operation:
- Assume the STA is associated to AP1. When the STA decides to roam to a new AP (e.g. AP2), the STA will send Power Saving Mode indication to AP1, so AP1 will buffer any incoming data for the STA.
- The STA will conduct Reassociation process and key derivation with the new AP (AP2), i.e. the 802.11r incoming standard procedures.
- When the STA receives the Reassociation response from AP2, the STA immediately sends a Power saving mode indication to the new AP (AP2). So AP2 will buffer any incoming data for the STA.
- The STA switches to the old AP (AP1) and checks whether there is any data buffered. If yes, the STA will poll the buffered data from AP1.
- Once the STA cleans up the data, the STA will switch to the new AP and indicate its "active", and poll the buffered packet from the new AP.
- AP1 can now clean up the association state or based on time-out let the state expire.
- Turning now to FIG. 2, shown generally as 200, is a procedure of packet loss avoidance tansition of an embodiment of the present invention Mobile client 205 may send a (re) Association Request which may include recommended Post Transition Session Aliveness Interval 255 to AP1 210. AP1 210 may respond with a (Re)association Response which may include confirmed Post-Transition Session Aliveness Interval 260. When STA decides to roam to a new AP at 220 it may send instructions at 265 to set AP1 to power saving mode. AP1 stores STA's packets at 225 in response to instructions at 265 to set power saving mode. 230 depicts the reassociation Process and Key derivation communication between mobile client 205 and AP2 215. At 270 Mobile Client 205 sends power saving mode instructions to AP2. The STA switches back to the old AP to receive queued packets if there are any at 235 and sets active mode instructions to AP1 at 275. At 240 the post-transition extended session occurs and AP1 polls the left over packets at 280. 245 indicates the active mode is set by Mobile Client 205 to AP2.

Some embodiments of the present invention may be implemented, for example, using a machine-readable medium or article which may store an instruction or a set of instructions that, if executed by a machine, for example, by the apparatus and system of FIG. 2, by mobile client or wireless station (STA) 205, in communication with AP1 210 and AP2 215, by a processor (not shown), or by other suitable machines, cause the machine to perform a method and/or operations in accordance with embodiments of the invention. Such machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Re-Writeable (CD-RW), optical disk, magnetic media, various types of Digital Versatile Disks (DVDs), a tape, a cassette, or the like. The instructions may include any suitable type of code, for example, source code, compiled code, interpreted code, executable code, static code, dynamic code, or the like, and may be implemented using any suitable high-level, low-level, object-oriented, visual, compiled and/or interpreted programming language, e.g., C, C++, Java, BASIC, Pascal, Fortran, Cobol, assembly language, machine code, or the like.

In an embodiment of the present invention, the machine-accessible medium that provides instructions, which when accessed, may cause the machine to perform operations comprising using a Post-Transition Extended Session and a Post-Transition Extended Session Aliveness Interval by wireless station (STA) to transition wireless communications from a first access point (AP1) to a second access point (AP2). In an embodiment of the present invention the machine-accessible medium may further comprise the instructions causing the machine to perform operations further comprising allowing the STA and AP1 to keep an old session alive for the duration of the Post-Transition Extended Session Aliveness Interval and during the Post-transition Extended Session and coming back to the AP1 and recovering all the leftover packets by the STA; the instructions may cause the machine to perform operations further comprising, causing the Post-Transition Session Aliveness Interval to be 2 bytes long.

Further, in an embodiment of the present invention, the machine-accessible medium may further comprise the instructions causing the machine to perform operations further comprising sending a Power Saving Mode indication to AP1 when the STA decides to roam to AP2 so AP1 will buffer any incoming data for the STA and whereafter the STA will conduct Reassociation process and key derivation with AP2, and also may comprise the instructions causing the machine to perform operations further comprising when the STA receives a Reassociation response from AP2, causing the STA to immediately send a Power saving mode indication to AP2 so AP2 will buffer any incoming data for the STA and causing the STA to switch to AP1 and to check whether there is any data buffered and, if yes, causing the STA to poll the buffered data from AP1.

Also, in an embodiment of the present invention the machine-accessible medium may further comprise the instructions causing the machine to perform operations further comprising switching to the new AP and indicating its "active" and polling the buffered packet from AP2 once the STA cleans up the data, and subsequently cleaning up the association state by AP1 or, based on time-out, letting the state expire.

Some embodiments of the present invention may be implemented by software, by
hardware, or by any combination of software and/or hardware as may be suitable for specific applications or in accordance with specific design requirements. Embodiments of the invention may include units and/or sub-units, which may be separate of each other or combined together, in whole or in part, and may be implemented using specific, multipurpose or general processors or controllers, or devices as are known in the art. Some embodiments of the invention may include buffers, registers, stacks, storage units and/or memory units, for temporary or long-term storage of data or in order to facilitate the operation of a specific embodiment.

Yet another embodiment of the present invention provides a system, comprising a wireless station (STA); a first access point (API) operable to communicate with the wireless station; a second access point (AP2) operable to communicate with the wireless station; and
wherein the STA is adapted to transition wireless communications from the first access point (API) to the second access point (AP2) using a Post-Transition Extended Session and a Post-Transition Extended Session Aliveness Interval to allow the STA and API to keep an old session alive for the duration of the Post- Transition Extended Session Aliveness Interval and during the Post-transition Extended Session, the STA can come back to the API and recover all the leftover packets.

The system may comprise a di-pole directional antenna connected to AP1 or AP2.

While certain features of the invention have been illustrated and described herein, many modifications, substitutions, changes, and equivalents may occur to those skilled in the art.

## Claims

1. An apparatus, comprising:
a wireless station, STA (205), arranged to transition wireless communications from a first access point, AP1 (210), to a second access point, AP2 (215), in an IEEE 802.11n-compliant wireless network supporting MAC Service Data Unit, MSDU, aggregation; and
wherein said STA (205), during said wireless communications transition, is arranged to use a Post-Transition Extended Session and a Post-Transition Extended Session Aliveness Interval, wherein the Post-Transition Extended Session is an extension to the session for the Post-Transition Extended Session Aliveness Interval, being a time period that the STA (205) and AP1 (210) keep a session alive after the transition, and wherein when said STA (205) roams to AP2 (215), said STA (205) is arranged
t o send a Power Saving Mode indication to AP1 (210),
in response to the Power Saving Mode indication from the STA (205), the AP1 (210) is arranged to buffer incoming data for the STA (205),
after sending the Power Saving Mode indication, said STA (205) is arranged to conduct a Reassociation process and key derivation with AP2 (215),
when said STA (205) receives a Reassociation response from AP2 (215), said STA (205) is arranged to send a Power Saving Mode indication to AP2 (215) to cause AP2 (215) to buffer incoming data for the STA (205), and
said STA (205) is arranged to switch to AP1 (210) to receive any data buffered by AP1 (210) while AP2 (215) buffers data for the STA (205) while the STA (205) receives buffered data from AP1 (210).

2. The apparatus of claim 1, wherein said Post-Transition Extended Session and said Post-Transition Extended Session Aliveness Interval are arranged to allow said STA (205) and AP1 (210) to keep an old session alive for the duration of the Post- Transition Extended Session Aliveness Interval and during the Post-transition Extended Session, said STA (205) is arranged to be able to come back to the AP1 (210) and recover all leftover packets.

3. The apparatus of claim 2, wherein said Post- Transition Session Aliveness Interval is 2 bytes long, and is negotiated between AP1 (210) and STA (205) during an association or Reassociation process.

4. The apparatus of claim 1, wherein once said STA (205) cleans up the data, the STA (205) is arranged to switch to AP2 (215) and indicate it is "active", and poll the buffered packet from AP2 (215) and subsequently AP1 (210) is arranged to clean up the association state or, based on time-out, let the state expire.

5. A method, comprising:
using a Post-Transition Extended Session and a Post-Transition Extended Session Aliveness Interval by wireless station, STA (205), to transition wireless communications from a first access point, AP1 (210), to a second access point, AP2 (215), in an IEEE 802.11n-compliant wireless network supporting MAC Service Data Unit, MSDU, aggregation, wherein the Post-Transition Extended Session is an extension to the session for the Post-Transition Extended Session Aliveness Interval, being a time period that the STA (205) and AP1 (210) keep a session alive after the transition;
sending a Power Saving Mode indication to AP1 (210) when said STA (205) roams to AP2 (215) to cause AP1 (210) to buffer incoming data for the STA (205);
causing said STA (205) to conduct a Reassociation process and key derivation with AP2 (215), wherein when said STA (205) receives a Reassociation response from AP2 (215);
sending, with said STA (205), a Power saving mode indication to AP2 (215) to cause AP2 (215) to buffer any incoming data for the STA (205);
switching said STA (205) to AP1 (210);
checking whether there is any data buffered and;
polling with said STA (205) the buffered data from AP1 (210), if there is buffered data at AP1 (210).

6. The method of claim 5, further comprising allowing said STA (205) and AP1 (210) to keep an old session alive for the duration of the Post- Transition Extended Session Aliveness Interval and during the Post-transition Extended Session and coming back to the AP1 (210) and recovering all the leftover packets by said STA (205).

7. The method of claim 6, wherein said Post- Transition Session Aliveness Interval is 2 bytes long, and is negotiated between AP1 (210) and STA (205) during an association or Reassociation process.

8. The method of claim 5, further comprising switching to AP2 (215) and indicating it is "active" and polling the buffered packet from AP2 (215) once said STA (205) cleans up the data, and subsequently cleaning up the association state by AP1 (210) or, based on time-out, letting the state expire.

9. A non-transitory machine-accessible medium that provides instructions, which when accessed, cause a machine to perform operations comprising:
using a Post-Transition Extended Session and a Post-Transition Extended Session Aliveness Interval by wireless station, STA (205), to transition wireless communications from a first access point, AP1 (210), to a second access point, AP2 (215), in an IEEE 802.11n-compliant wireless network supporting MAC Service Data Unit, MSDU, aggregation, wherein the Post-Transition Extended Session is an extension to the session for the Post-Transition Extended Session Aliveness Interval, being a time period that the STA (205) and AP1 (210) keep a session alive after the transition;
sending a Power Saving Mode indication to AP1 (210) when said STA (205) roams to AP2 (215) to cause AP1 (210) to buffer incoming data for the STA (205), whereafter said STA (205) conducts Reassociation process and key derivation with AP2 (215), wherein when said STA (205) receives a Reassociation response from AP2 (215), said STA (205) sends a Power saving mode indication to AP2 (215) to cause AP2 (215) to buffer any incoming data for the STA (205) and said STA (205) switches to AP1 (210) and checks whether there is any data buffered and, if yes, said STA (205) polls the buffered data from AP1 (210).

10. The machine-accessible medium of claim 9, further comprising said instructions causing said machine to perform operations further comprising allowing said STA (205) and AP1 (210) to keep an old session alive for the duration of the Post-Transition Extended Session Aliveness Interval and during the Post-transition Extended Session and coming back to the AP1 (210) and recovering all the leftover packets by said STA (205).

11. The machine-accessible medium of claim 10, further comprising said instructions causing said machine to perform operations further comprising, causing said Post-Transition Session Aliveness Interval to be 2 bytes long.

12. The machine-accessible medium of claim 10, further comprising said instructions causing said machine to perform operations further comprising switching to AP2 (215) and indicating it is "active" and polling the buffered packet from AP2 (215) once said STA (205) cleans up the data, and subsequently cleaning up the association state by AP1 (210) or, based on time-out, letting the state expire.

13. An IEEE 802.11n-compliant wireless network system supporting MAC Service Data Unit, MSDU, aggregation, comprising:
a wireless station, STA (205);
a first access point ,AP1 (210), arranged to communicate with said wireless station;
a second access point, AP2 (215), arranged to communicate with said wireless station; and
wherein said STA (205) during said wireless communications transition is arranged to use a Post-Transition Extended Session and a Post-Transition Extended Session Aliveness Interval, wherein the Post-Transition Extended Session is an extension to the session for the Post-Transition Extended Session Aliveness Interval, being a time period that the STA (205) and AP1 (210) keep a session alive after the transition and wherein when said STA (205) roams to AP2 (215), said STA (205) is arranged:
to send a Power Saving Mode indication to AP1 (210),
in response to the Power Saving Mode indication from the STA (205), the AP1 (210) is arranged to buffer incoming data for the STA (205),
after sending the Power Saving Mode indication, said STA (205) is arranged to conduct Reassociation process and key derivation with AP2 (215),
when said STA (205) receives a Reassociation response from AP2 (215), said STA (205) is arranged to send a Power saving mode indication to AP2 (215) to cause AP2 (215) to buffer incoming data for the STA (205), and
said STA (205) is arranged to switch to AP1 (210) to receive any data buffered by AP1 (210) while maintaining connection with AP2 (215).

14. The system of claim 13, wherein said Post-Transition Session Aliveness Interval is 2 bytes long, and is negotiated between AP1 (210) and STA (205) during an association or Reassociation process.

15. The system of claim 14, wherein when said STA (205) decides to roam to AP2 (215), said STA (205) is arranged to send a Power Saving Mode indication to AP1 (210), so AP1 (210) will buffer any incoming data for the STA (205), whereafter said STA (205) is arranged to conduct Reassociation process and key derivation with AP2 (215).

## Patentansprüche

1. Vorrichtung, die Folgendes umfasst:
eine drahtlose Station, STA (205), die eingerichtet ist für einen Übergang drahtloser Kommunikationen von einem ersten Zugangspunkt, AP1 (210), zu einem zweiten Zugangspunkt, AP2 (215), in einem IEEE-802.11n-konformen drahtlosen Netz, das die MAC-Service-Data-Unit(MSDU)-Aggregation unterstützt; und
wobei die STA (205) während des Übergangs drahtloser Kommunikationen eingerichtet ist, um eine verlängerte Sitzung nach einem Übergang und ein Intervall zur Aufrechterhaltung einer verlängerten Sitzung nach einem Übergang zu nutzen, wobei die verlängerte Sitzung nach einem Übergang eine Verlängerung der Sitzung für das Intervall zur Aufrechterhaltung einer verlängerten Sitzung nach einem Übergang ist, bei dem es sich um einen Zeitraum handelt, in dem die STA (205) und der AP1 (210) eine Sitzung nach dem Übergang aufrechterhalten, und wobei, wenn die STA (205) durch Roaming zum AP2 (215) wechselt, die STA (205) eingerichtet ist:
um einen Energiesparmodushinweis an den AP1 (210) zu senden;
der AP1 (210) als Antwort auf den Energiesparmodushinweis von der STA (205) eingerichtet ist, um eingehende Daten für die STA (205) zu puffern,
die STA (205) nach dem Senden des Energiesparmodushinweises eingerichtet ist, um einen Reassoziierungsprozess und eine Schlüsselableitung mit dem AP2 (215) vorzunehmen,
wenn die STA (205) eine Reassoziierungsantwort vom AP2 (215) empfängt, die STA (205) eingerichtet ist, um einen Energiesparmodushinweis an den AP2 (215) zu senden, um zu bewirken, dass der AP2 (215) eingehende Daten für die STA (205) puffert, und
die STA (205) eingerichtet ist, um zum AP1 (210) umzuschalten, um jegliche vom AP1 (210) gepufferten Daten zu empfangen, während der AP2 (215) Daten für die STA (205) puffert, während die STA (205) gepufferte Daten vom AP1 (210) empfängt.

2. Vorrichtung nach Anspruch 1, wobei die verlängerte Sitzung nach einem Übergang und das Intervall zur Aufrechterhaltung einer verlängerten Sitzung nach einem Übergang eingerichtet sind, um zuzulassen, dass die STA (205) und der AP1 (210) eine alte Sitzung für die Dauer des Intervalls zur Aufrechterhaltung einer verlängerten Sitzung nach einem Übergang und während der verlängerten Sitzung nach einem Übergang aufrechterhalten, die STA (205) eingerichtet ist, um zum AP1 (210) zurückkommen und alle übrigen Pakete wiederherstellen zu können.

3. Vorrichtung nach Anspruch 2, wobei das Intervall zur Aufrechterhaltung einer Sitzung nach einem Übergang 2 Byte lang ist und zwischen dem AP1 (210) und der STA (205) während eines Assoziierungs- oder eines Reassoziierungsprozesses ausgehandelt wird.

4. Vorrichtung nach Anspruch 1, wobei, sobald die STA (205) die Daten bereinigt, die STA (205) eingerichtet ist, um zum AP2 (215) umzuschalten und darauf hinzuweisen, dass er "aktiv" ist, und das gepufferte Paket aus dem AP2 (215) abzurufen, und anschließend der AP1 (210) eingerichtet ist, um den Assoziierungszustand zu bereinigen oder basierend auf einem Timeout den Zustand ablaufen zu lassen.

5. Verfahren, das Folgendes umfasst:
Nutzen einer verlängerten Sitzung nach einem Übergang und eines Intervalls zur Aufrechterhaltung einer verlängerten Sitzung nach einem Übergang durch eine drahtlose Station, STA (205), für einen Übergang drahtloser Kommunikationen von einem ersten Zugangspunkt, AP1 (210), zu einem zweiten Zugangspunkt, AP2 (215), in einem IEEE-802.11n-konformen drahtlosen Netz, das die MAC-Service-Data-Unit(MSDU)-Aggregation unterstützt, wobei die verlängerte Sitzung nach einem Übergang eine Verlängerung der Sitzung für das Intervall zur Aufrechterhaltung einer verlängerten Sitzung nach einem Übergang ist, bei dem es sich um einen Zeitraum handelt, in dem die STA (205) und der AP1 (210) eine Sitzung nach dem Übergang aufrechterhalten;
Senden eines Energiesparmodushinweises an den AP1 (210), wenn die STA (205) durch Roaming zum AP2 (215) wechselt, um zu bewirken, dass der AP1 (210) eingehende Daten für die STA (205) puffert;
Bewirken, dass die STA (205) einen Reassoziierungsprozess und eine Schlüsselableitung mit dem AP2 (215) vornimmt, wobei, wenn die STA (205) eine Reassoziierungsantwort vom AP2 (215) empfängt;
Senden eines Energiesparmodushinweises an den AP2 (215) mit der STA (205), um zu bewirken, dass der AP2 (215) jegliche eingehenden Daten für die STA (205) puffert;
Umschalten der STA (205) zum AP1 (210);
Überprüfen, ob irgendwelche gepufferten Daten vorliegen; und
Abrufen der gepufferten Daten aus dem AP1 (210) mit der STA (205), falls am AP1 (210) gepufferte Daten vorliegen.

6. Verfahren nach Anspruch 5, das ferner Zulassen, dass die STA (205) und der AP1 (210) eine alte Sitzung für die Dauer des Intervalls zur Aufrechterhaltung einer verlängerten Sitzung nach einem Übergang und während der verlängerten Sitzung nach einem Übergang aufrechterhalten, und Zurückkommen zum AP1 (210) und Wiederherstellen aller übrigen Pakete durch die STA (205) umfasst.

7. Verfahren nach Anspruch 6, wobei das Intervall zur Aufrechterhaltung einer Sitzung nach einem Übergang 2 Byte lang ist und zwischen dem AP1 (210) und der STA (205) während eines Assoziierungs- oder eines Reassoziierungsprozesses ausgehandelt wird.

8. Verfahren nach Anspruch 5, das ferner Umschalten zum AP2 (215) und Hinweisen darauf, dass er "aktiv" ist, und Abrufen des gepufferten Pakets aus dem AP2 (215), sobald die STA (205) die Daten bereinigt, und anschließendes Bereinigen des Assoziierungszustands durch den AP1 (210) oder basierend auf einem Timeout Ablaufenlassen des Zustands umfasst.

9. Nicht transientes maschinenzugängliches Medium, das Befehle bereitstellt, die, wenn auf sie zugegriffen wird, bewirken, dass eine Maschine Vorgänge durchführt, die Folgendes umfassen:
Nutzen einer verlängerten Sitzung nach einem Übergang und eines Intervalls zur Aufrechterhaltung einer verlängerten Sitzung nach einem Übergang durch eine drahtlose Station, STA (205), für einen Übergang drahtloser Kommunikationen von einem ersten Zugangspunkt, AP1 (210), zu einem zweiten Zugangspunkt, AP2 (215), in einem IEEE-802.11n-konformen drahtlosen Netz, das die MAC-Service-Data-Unit(MSDU)-Aggregation unterstützt, wobei die verlängerte Sitzung nach einem Übergang eine Verlängerung der Sitzung für das Intervall zur Aufrechterhaltung einer verlängerten Sitzung nach einem Übergang ist, bei dem es sich um einen Zeitraum handelt, in dem die STA (205) und der AP1 (210) eine Sitzung nach dem Übergang aufrechterhalten;
Senden eines Energiesparmodushinweises an den AP1 (210), wenn die STA (205) durch Roaming zum AP2 (215) wechselt, um zu bewirken, dass der AP1 (210) eingehende Daten für die STA (205) puffert, woraufhin die STA (205) einen Reassoziierungsprozess und eine Schlüsselableitung mit dem AP2 (215) vornimmt, wobei, wenn die STA (205) eine Reassoziierungsantwort vom AP2 (215) empfängt, die STA (205) einen Energiesparmodushinweis an den AP2 (215) sendet, um zu bewirken, dass der AP2 (215) jegliche eingehenden Daten für die STA (205) puffert, und die STA (205) zum AP1 (210) umschaltet und überprüft, ob irgendwelche gepufferten Daten vorliegen, und, falls ja, die STA (205) die gepufferten Daten aus dem AP1 (210) abruft.

10. Maschinenzugängliches Medium nach Anspruch 9, das ferner umfasst, dass die Befehle bewirken, dass die Maschine Vorgänge durchführt, die ferner Zulassen, dass die STA (205) und der AP1 (210) eine alte Sitzung für die Dauer des Intervalls zur Aufrechterhaltung einer verlängerten Sitzung nach einem Übergang und während der verlängerten Sitzung nach einem Übergang aufrechterhalten, und Zurückkommen zum AP1 (210) und Wiederherstellen aller übrigen Pakete durch die STA (205) umfassen.

11. Maschinenzugängliches Medium nach Anspruch 10, das ferner umfasst, dass die Befehle bewirken, dass die Maschine Vorgänge durchführt, die ferner Bewirken, dass das Intervall zur Aufrechterhaltung einer Sitzung nach einem Übergang 2 Byte lang ist, umfassen.

12. Maschinenzugängliches Medium nach Anspruch 10, das ferner umfasst, dass die Befehle bewirken, dass die Maschine Vorgänge durchführt, die ferner Umschalten zum AP2 (215) und Hinweisen darauf, dass er "aktiv" ist, und Abrufen des gepufferten Pakets aus dem AP2 (215), sobald die STA (205) die Daten bereinigt, und anschließendes Bereinigen des Assoziierungszustands durch den AP1 (210) oder basierend auf einem Timeout Ablaufenlassen des Zustands umfassen.

13. System eines IEEE-802.11n-konformen drahtlosen Netzes, das die MAC-Service-Data-Unit(MSDU)-Aggregation unterstützt, das Folgendes umfasst:
eine drahtlose Station, STA (205);
einen ersten Zugangspunkt, AP1 (210), der eingerichtet ist, um mit der drahtlosen Station zu kommunizieren;
einen zweiten Zugangspunkt, AP2 (215), der eingerichtet ist, um mit der drahtlosen Station zu kommunizieren; und
wobei die STA (205) während des Übergangs drahtloser Kommunikationen eingerichtet ist, um eine verlängerte Sitzung nach einem Übergang und ein Intervall zur Aufrechterhaltung einer verlängerten Sitzung nach einem Übergang zu nutzen, wobei die verlängerte Sitzung nach einem Übergang eine Verlängerung der Sitzung für das Intervall zur Aufrechterhaltung einer verlängerten Sitzung nach einem Übergang ist, bei dem es sich um einen Zeitraum handelt, in dem die STA (205) und der AP1 (210) eine Sitzung nach dem Übergang aufrechterhalten, und wobei, wenn die STA (205) durch Roaming zum AP2 (215) wechselt, die STA (205) eingerichtet ist, um:
einen Energiesparmodushinweis an den AP1 (210) zu senden,
der AP1 (210) als Antwort auf den Energiesparmodushinweis von der STA (205) eingerichtet ist, um eingehende Daten für die STA (205) zu puffern,
die STA (205) nach dem Senden des Energiesparmodushinweises eingerichtet ist, um einen Reassoziierungsprozess und eine Schlüsselableitung mit dem AP2 (215) vorzunehmen,
wenn die STA (205) eine Reassoziierungsantwort vom AP2 (215) empfängt, die STA (205) eingerichtet ist, um einen Energiesparmodushinweis an den AP2 (215) zu senden, um zu bewirken, dass der AP2 (215) eingehende Daten für die STA (205) puffert, und
die STA (205) eingerichtet ist, um zum AP1 (210) umzuschalten, um jegliche vom AP1 (210) gepufferten Daten zu empfangen, während die Verbindung zum AP2 (215) gehalten wird.

14. System nach Anspruch 13, wobei das Intervall zur Aufrechterhaltung einer Sitzung nach einem Übergang 2 Byte lang ist und zwischen dem AP1 (210) und der STA (205) während eines Assoziierungs- oder eines Reassoziierungsprozesses ausgehandelt wird.

15. System nach Anspruch 14, wobei, wenn die STA (205) entscheidet, durch Roaming zum AP2 (215) zu wechseln, die STA (205) eingerichtet ist, um einen Energiesparmodushinweis an den AP1 (210) zu senden, sodass der AP1 (210) jegliche eingehenden Daten für die STA (205) puffert, woraufhin die STA (205) eingerichtet ist, um einen Reassoziierungsprozess und eine Schlüsselableitung mit dem AP2 (215) vorzunehmen.

## Revendications

1. Appareil, comprenant :
une station sans fil, STA (205), agencée pour une transition de communications sans fil d'un premier point d'accès, AP1 (210), à un second point d'accès, AP2 (215), dans un réseau sans fil conforme à la norme IEEE 802.11n qui prend en charge l'agrégation d'unités de données de service, MSDU ; et
dans lequel ladite station STA (205), durant ladite transition des communications sans fil, est agencée pour utiliser une session étendue post-transition et un intervalle d'activité de session étendue post-transition, dans lequel la session étendue post-transition est une extension de la session pendant l'intervalle d'activité de session étendue post-transition, celui-ci étant une période de temps durant laquelle la station STA (205) et le point AP1 (210) maintiennent une section active après la transition, et dans lequel quand ladite station STA (205) se rend en itinérance jusqu'au point AP2 (215), ladite station STA (205) est agencée :
pour envoyer une indication de mode d'économie d'énergie au point AP1 (210),
en réponse à l'indication de mode d'économie d'énergie provenant de la station STA (205), le point AP1 (210) est agencé pour tamponner les données entrantes destinées à la station STA (205),
après l'envoi de l'indication de mode d'économie d'énergie, ladite station STA (205) est agencée pour effectuer un processus de réassociation et une dérivée de clé avec le point AP2 (215),
quand ladite station STA (205) reçoit une réponse de réassociation depuis le point AP2 (215), ladite station STA (205) est agencée pour envoyer une indication de mode d'économie d'énergie au point AP2 (215) pour amener le point AP2 (215) à tamponner les données entrantes destinées à la station STA (205), et
ladite station STA (205) est agencée pour commuter sur le point AP1 (210) afin de recevoir toutes données tamponnées par le point AP1 (210) pendant que le point AP2 (215) tamponne les données adressées à la station STA (205) pendant que la station STA (205) reçoit les données tamponnées depuis le point AP1 (210).

2. Appareil selon la revendication 1, dans lequel ladite session étendue post-transition et ledit intervalle d'activité de session étendue post-transition sont agencés pour permettre à ladite station STA (205) et audit point AP1 (210) de maintenir une ancienne session active pendant la durée de l'intervalle d'activité de session étendue post-transition et durant la session étendue post-transition, ladite station STA (205) est agencée pour pouvoir revenir vers le point AP1 (210) et récupérer tous les paquets restants.

3. Appareil selon la revendication 2, dans lequel ledit intervalle d'activité de session post-transition a une longueur de 2 octets, et est négocié entre le point AP1 (210) et la station STA (205) durant un processus d'association ou de réassociation.

4. Appareil selon la revendication 1, dans lequel une fois que ladite station STA (205) a épuré les données, la station STA (205) est agencée pour commuter sur le point AP2 (215) et indiquer qu'il est "actif", et demande le paquet tamponné auprès du point AP2 (215) puis le point AP1 (210) est agencé pour épurer l'état d'association ou, en fonction d'un délai d'expiration, laisser l'état expiré.

5. Procédé, comprenant :
l'utilisation d'une session étendue post-transition et d'un intervalle d'activité de session étendue post-transition par une station sans fil, STA (205), pour effectuer une transition de communications sans fil d'un premier point d'accès, AP1 (210), à un second point d'accès, AP2 (215), dans un réseau sans fil conforme à la norme IEEE 802.11n qui prend en charge l'agrégation d'unités de données de service, MSDU, dans lequel la session étendue post-transition est une extension de la session pendant l'intervalle d'activité de session étendue post-transition, celui-ci étant une période de temps durant laquelle la station STA (205) et le point AP1 (210) maintiennent une section active après la transition :
l'envoi d'une indication de mode d'économie d'énergie au point AP1 (210) quand ladite station STA (205) se rend en itinérance jusqu'au point AP2 (215) pour amener le point AP1 (210) à tamponner les données entrantes destinées à la station STA (205) ;
amener ladite station STA (205) à effectuer un processus de réassociation et une dérivée de clé avec le point AP2 (215) ; dans lequel, quand ladite station STA (205) reçoit une réponse de réassociation depuis le point AP2 (215) ;
l'envoi, par ladite station STA (205), d'une indication de mode d'économie d'énergie au point AP2 (215) pour amener le point AP2 (215) à tamponner toutes données entrantes destinées à la station STA (205) ;
la commutation de la station STA (205) sur le point AP1 (210) ;
la vérification qu'il existe ou non des données tamponnées ; et
la demande par ladite station STA (205) des données tamponnées auprès du point AP1 (210), s'il existe des données tamponnées au point AP1 (210).

6. Procédé selon la revendication 5, comprenant en outre l'autorisation à ladite station STA (205) et audit point AP1 (210) de maintenir une ancienne session active pendant la durée de l'intervalle d'activité de session étendue post-transition et durant la session étendue post-transition, et le retour vers le point AP1 (210) et la récupération de tous les paquets restants par ladite station STA (205).

7. Procédé selon la revendication 6, dans lequel ledit intervalle d'activité de session post-transition a une longueur de 2 octets, et est négocié entre le point AP1 (210) et la station STA (205) durant un processus d'association ou de réassociation.

8. Procédé selon la revendication 5, comprenant en outre la commutation sur le point AP2 (215) et l'indication qu'il est "actif", et la demande du paquet tamponné auprès du point AP2 (215) une fois que ladite station STA (205) a épuré les données, puis l'épuration de l'état d'association par le point AP1 (210) ou, en fonction d'un délai d'expiration, l'expiration de l'état.

9. Support transitoire accessible par machine qui fournit des instructions qui, lorsqu'elles sont sollicitées, amènent une machine à exécuter des opérations comprenant :
l'utilisation d'une session étendue post-transition et d'un intervalle d'activité de session étendue post-transition par une station sans fil, STA (205), pour effectuer une transition de communications sans fil d'un premier point d'accès, AP1 (210), à un second point d'accès, AP2 (215), dans un réseau sans fil conforme à la norme IEEE 802.11n qui prend en charge l'agrégation d'unités de données de service, MSDU, dans lequel la session étendue post-transition est une extension de la session pendant l'intervalle d'activité de session étendue post-transition, celui-ci étant une période de temps durant laquelle la station STA (205) et le point AP1 (210) maintiennent une section active après la transition :
l'envoi d'une indication de mode d'économie d'énergie au point AP1 (210) quand ladite station STA (205) se rend en itinérance jusqu'au point AP2 (215) pour amener le point AP1 (210) à tamponner les données entrantes destinées à la station STA (205), après quoi ladite station STA (205) effectue un processus de réassociation et une dérivée de clé avec le point AP2 (215), dans lequel quand ladite station STA (205) reçoit une réponse de réassociation depuis le point AP2 (215), ladite station STA (205) envoie une indication de mode d'économie d'énergie au point AP2 (215) pour amener le point AP2 (215) à tamponner toutes données entrantes destinées à la station STA (205) et ladite station STA (205) commute sur le point AP1 (210) et vérifie qu'il existe ou non des données tamponnées et, dans l'affirmative, ladite station STA (205) demande les données tamponnées auprès du point AP1 (210).

10. Support accessible par machine selon la revendication 9, comprenant en outre lesdites instructions qui amènent une machine à exécuter des opérations comprenant en outre l'autorisation à ladite station STA (205) et audit point AP1 (210) de maintenir une ancienne session active pendant la durée de l'intervalle d'activité de session étendue post-transition et durant la session étendue post-transition, et le retour vers le point AP1 (210) et la récupération de tous les paquets restants par ladite station STA (205).

11. Support accessible par machine selon la revendication 10 comprenant en outre lesdites instructions qui amènent une machine à exécuter des opérations comprenant en outre le fait de faire en sorte que ledit intervalle d'activité de session post-transition ait une longueur de 2 octets.

12. Support accessible par machine selon la revendication 10, comprenant en outre lesdites instructions qui amènent une machine à exécuter des opérations comprenant en outre la commutation sur le point AP2 (215) et l'indication qu'il est "actif", et la demande du paquet tamponné auprès du point AP2 (215) une fois que ladite station STA (205) a épuré les données, puis l'épuration de l'état d'association par le point AP1 (210) ou, en fonction d'un délai d'expiration, l'expiration de l'état.

13. Système de réseau sans fil conforme à la norme IEEE 802.11n qui prend en charge l'agrégation d'unités de données de service, MSDU, comprenant :
une station sans fil , STA (205) ;
un premier point d'accès, AP1 (210), agencé pour communiquer avec ladite station sans fil ;
un second point d'accès, AP2 (215), agencé pour communiquer avec ladite station sans fil ; et
dans lequel ladite station STA (205) durant ladite transition de communications sans fil est agencée pour utiliser une session étendue post-transition et un intervalle d'activité de session étendue post-transition, dans lequel la session étendue post-transition est une extension de la session pendant l'intervalle d'activité de session étendue post-transition, celui-ci étant une période de temps durant laquelle la station STA (205) et le point AP1 (210) maintiennent une section active après la transition, et dans lequel quand ladite station STA (205) se rend en itinérance jusqu'au point AP2 (215), ladite station STA (205) est agencée :
pour envoyer une indication de mode d'économie d'énergie au point AP1 (210),
en réponse à l'indication de mode d'économie d'énergie provenant de la station STA (205), le point AP1 (210) est agencé pour tamponner les données entrantes destinées à la station STA (205),
après l'envoi de l'indication de mode d'économie d'énergie, ladite station STA (205) est agencée pour effectuer un processus de réassociation et une dérivée de clé avec le point AP2 (215),
quand ladite station STA (205) reçoit une réponse de réassociation depuis le point AP2 (215), ladite station STA (205) est agencée pour envoyer une indication de mode d'économie d'énergie au point AP2 (215) pour amener le point AP2 (215) à tamponner les données entrantes destinées à la station STA (205), et
ladite station STA (205) est agencée pour commuter sur le point AP1 (210) afin de recevoir toutes données tamponnées par le point AP1 (210) tout en maintenant la connexion avec le point AP2 (215).

14. Système selon la revendication 13, dans lequel ledit intervalle d'activité de session post-transition a une longueur de 2 octets, et est négocié entre le point AP1 (210) et la station STA (205) durant un processus d'association ou de réassociation.

15. Système selon la revendication 14, dans lequel comment ladite station STA (205) décide de se rendre en itinérance jusqu'au point AP2 (215), ladite station STA (205) est agencée pour envoyer une indication de mode d'économie d'énergie au point AP1 (210), si bien que le point AP1 (210) tamponnera toutes données entrantes destinées à la station STA (205), après quoi ladite station STA (205) est agencée pour effectuer un processus de réassociation et une dérivée de clé avec le point AP2 (215).
